# EUROPÄISCHE PATENTSCHRIFT

(11) **EP 1 454 872 B1**
(45) Veröffentlichungstag und Bekanntmachung des Hinweises auf die Patenterteilung: **11.05.2005**
(21) Anmeldenummer: 03003365.8
(22) Anmeldetag: 14.02.2003
(51) Int. Cl.: B66C 23/78, B60S 9/02, B60P 1/54

(54) **Transportsicherung**
Transport securing device
Dispositif de fixation pour le transport

(43) Veröffentlichungstag der Anmeldung: 08.09.2004
(73) Patentinhaber: Palfinger AG, A-5101 Bergheim (AT)
(72) Erfinder: Sieberer, Franz, 4890 Weissenkirchen (AT)
(74) Vertreter: Hofinger, Stephan

(56) Entgegenhaltungen:
- EP-A- 0 694 460
- DE-U- 29 815 145
- US-A- 5 470 167

## Beschreibung

Die vorliegende Erfindung betrifft eine Transportsicherung für einen Seitenausleger eines Fahrzeuges mit einer Verriegelungsvorrichtung sowie einem zusätzlichen Sicherungshaken. Eine solche Transportsicherung ist aus der Österreichischen Norm ÖNorm EN12999 bekannt.

Derartige Seitenausleger erhöhen durch Vergrößerung der Standfläche die Stabilität des abgestellten Fahrzeuges, wodurch beispielsweise bei einem mit einem Kran versehenen Fahrzeug die Standsicherheit gesteigert wird. Während der Fahrt des Fahrzeuges muss sichergestellt sein, dass die Seitenausleger in ihrer voll eingeschobenen Transportposition bleiben und nicht versehentlich in eine teilweise oder vollständig ausgefahrene Position gelangen. In diesem Zusammenhang ist durch eine Norm geregelt, dass Transportsicherungen für derartige Seitenausleger neben einer bisher bereits üblichen Verriegelungsvorrichtung einen zusätzlichen unabhängigen Sicherungshaken aufweisen müssen.

Aufgabe der Erfindung ist es, bei gattungsgemäßen Transportsicherungen trotz der Verdoppelung der Sicherungssysteme eine einfache Handhabung zu gewährleisten.

Dies wird erfindungsgemäß dadurch erreicht, dass die Verriegelungsvorrichtung derart in Bezug auf den Sicherungshaken angeordnet ist, dass das Lösen der Verriegelungsvorrichtung zu einem Lösen des Sicherungshakens aus seiner Verankerung führt.

Durch die erfindungsgemäße Anordnung sind mit einem Handgriff beide Sicherungssysteme lösbar.

Bei einer vorteilhaften Ausführungsform der Erfindung ist vorgesehen, dass der Sicherungshaken schwenkbar gelagert ist. Vorteilhafterweise kann eine Feder vorgesehen sein, die den Sicherungshaken in die Verankerungsposition drückt, um ein ungewolltes Aufschwenken zu verhindern. Um die Verlässlichkeit zu optimieren, kann auch die Verriegelungsvorrichtung in Richtung der Verriegelungsposition von einer Feder beaufschlagt werden.

Die Verriegelungsvorrichtung ist vorteilhafterweise durch Drehen lösbar. Dies kann beispielsweise konstruktiv dadurch realisiert werden, dass die Verriegelungsvorrichtung zumindest eine schräg zur Längsmittelachse der Verriegelungsvorrichtung verlaufende Führungsfläche aufweist, wobei die Führungsfläche beim Drehen der Verriegelungsvorrichtung an einem Bolzen entlang gleitet.

Zur Erleichterung der Handhabung der Verriegelungsvorrichtung ist diese unabhängig von der Drehrichtung durch Drehen lösbar, was durch die Anordnung zweier Führungsflächen mit entgegengesetztem Schraubsinn realisierbar ist.

Bei einer konstruktiv besonders einfachen Ausführungsform der Erfindung ist vorgesehen, dass der Sicherungshaken an einem exzentrisch geformten, beispielsweise nockenförmig ausgebildeten Abschnitt der Verriegelungsvorrichtung teilweise anliegt.

Weitere Merkmale und Einzelheiten der Erfindung ergeben sich aus der nachfolgenden Figurenbeschreibung. Dabei zeigt:
- Fig. 1a: ein Fahrzeug mit Seitenauslegern, die durch eine erfindungsgemäße Transportsicherung gesichert sind,
- Fig. 1b: eine Detailansicht zur Figur 1a, aus der die Anordnung der erfindungsgemäßen Verriegelungsvorrichtung am Fahrzeug hervorgeht,
- Fig. 2a, 2b, 2c: die erfindungsgemäße Transportsicherung mit einem Seitenausleger in gesicherter und verriegelter Transportstellung in einer Draufsicht, einem Längsschnitt und einem Querschnitt,
- Fig. 3a, 3b, 3c: die erfindungsgemäße Transportsicherung nach einem ersten Entsicherungsschritt in einer Draufsicht, einem Längsschnitt und einem Querschnitt,
- Fig. 4a, 4b, 4c, 4d: die erfindungsgemäße Transportsicherung in Transportstellung und teilweise entriegeltem Zustand in Draufsicht, Seitenansicht, Querschnitt und einer weiteren Seitenansicht,
- Fig. 5: die erfindungsgemäße Transportsicherung in einem teilweise entriegelten Zustand im Querschnitt,
- Fig. 6a, 6b, 6c: die erfindungsgemäße Transportsicherung in entriegelter Transportstellung in einer Draufsicht, einem Längsschnitt und einem Querschnitt,
- Fig. 7a, 7b, 7c: die erfindungsgemäße Transportsicherung in entriegelter Transportstellung in einer Draufsicht, einem Längsschnitt und einem Querschnitt,
- Fig. 8a, 8b, 8c: die erfindungsgemäße Transportsicherung nach der teilweisen Herausbewegung des Seitenauslegers in einer Draufsicht, einem Längsschnitt und einem Querschnitt,
- Fig. 9a, 9b, 9c: die erfindungsgemäße Transportsicherung in verriegelter Arbeitsposition in einer Draufsicht, einem Längsschnitt und einem Querschnitt,
- Fig.10a, 10b, 10c: die erfindungsgemäße Transportsicherung in entriegelter Arbeitsposition in einer Draufsicht, einem Längsschnitt und einem Querschnitt und
- Fig. 11a, 11b, 11c: die erfindungsgemäße Transportsicherung bei teilweise eingeschobenem Seitenausleger.

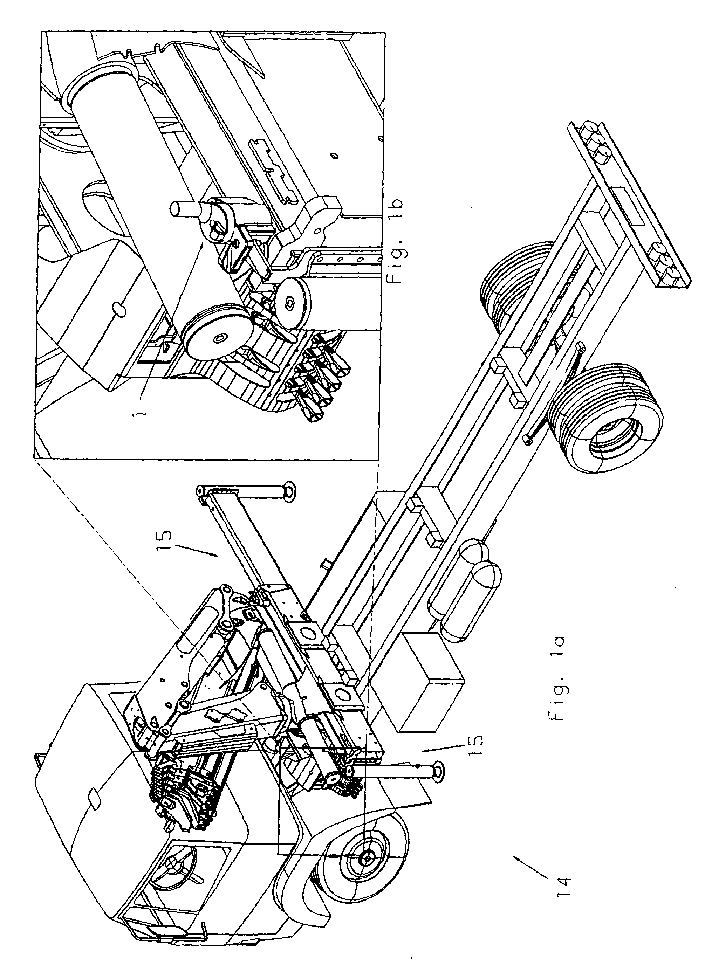

Figur 1a zeigt ein Fahrzeug 14 mit einem als Kran ausgeführten Fahrzeugaufbau, wobei das Fahrzeug 14 zwei Seitenausleger 15 aufweist und der rechte Seitenausleger 15 vollständig in seine Arbeitsposition bewegt wurde. Figur 1b zeigt eine Detailansicht der Figur 1a, in der die Anordnung der erfindungsgemäßen Transportsicherung erkennbar ist.

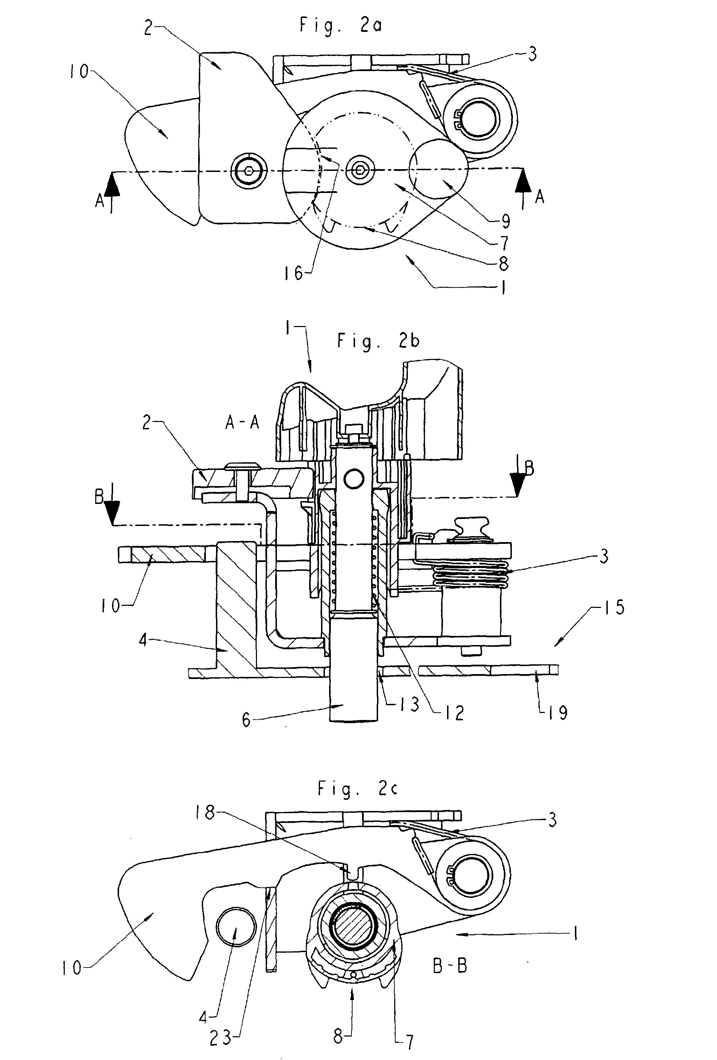

Figur 2a zeigt die Transportsicherung in einer Draufsicht, wobei die beiden am Fahrzeugaufbau ortsfest angeordneten Bestandteile der Transportsicherung, nämlich die Verriegelungsvorrichtung 1 sowie der Sicherungshaken 10, erkennbar sind. Im gezeigten Ausführungsbeispiel ist der Sicherungshaken 10 durch eine Feder 3 in Richtung seiner Verankerungsposition beaufschlagt. Die Verriegelungsvorrichtung 1 ist drehbar gelagert und kann über die Handhabe 9 vom Bediener gedreht werden. Ebenfalls zu erkennen ist der nockenförmige Abschnitt 7 der Verriegelungsvorrichtung 1, welcher bei Betätigung der Handhabe 9 ebenfalls gedreht wird. Der nockenförmige Abschnitt 7 weist eine Ausnehmung 16 auf, wobei die Verriegelungsvorrichtung 1 im gezeigten Zustand durch den Klemmhebel 2, der den nockenförmigen Abschnitt 7 an dessen Ausnehmung 16 formschlüssig feststellt, gegen eine unbeabsichtigte Betätigung gesichert ist.

Figur 2b zeigt einen Querschnitt entlang der Linie A-A der Figur 2a, wobei zusätzlich der am Seitenausleger 15 angeordnete, die Verankerungsposition des Sicherungshakens 10 bildende Stift 4 sowie der die Verriegelungsvorrichtung 1 verankernde Bolzen 6 erkennbar sind. Der Bolzen 6 wird von der Feder 12 in Richtung der gezeigten Verriegelungsöffnung 13 beaufschlagt. Die unbeabsichtigte Herausbewegung des Seitenauslegers 15 aus seiner gezeigten gesicherten und gesperrten Transportposition wird sowohl durch den den Stift 4 umgreifenden Sicherungshaken 10 als auch, unabhängig davon, durch den in die Verankerungsöffnung 13 eingeführten Bolzen 6 verhindert.

Figur 2c zeigt einen Querschnitt der Figur 2b entlang der Linie B-B, wobei zusätzlich ein am Sicherungshaken 10 angeordneter Zapfen 18 zu erkennen ist. In seiner gezeigten Verankerungsposition ruht der den Stift 4 umgreifende Sicherungshebel 10 an einer Auflagefläche 23 am statischen, mit dem Fahrzeug 14 verbundenen Teil der Verriegelungsvorrichtung 1.

In den nachfolgenden Figuren wird auf die wiederholte Bezugnahme identischer Bauteile verzichtet. Die nachfolgenden Figuren zeigen sukzessive die Überführung des Seitenauslegers 15 aus seiner gesicherten und versperrten Transportposition in seine voll herausbewegte Arbeitsposition und wieder zurück.

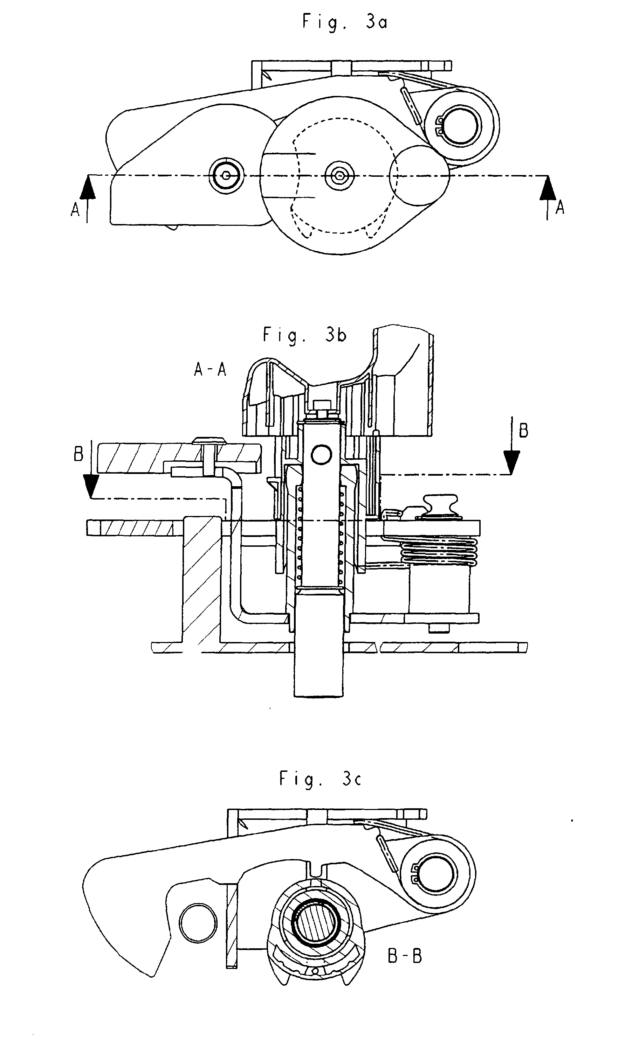

In Figur 3a ist erkennbar, dass in einem ersten Schritt der Klemmhebel 2 zur Freigabe der Verriegelungsvorrichtung 1 verschwenkt wurde, sodass die Verriegelungsvorrichtung 1 nunmehr über die Handhabe 9 drehbar ist. Figur 3b zeigt einen Längsschnitt durch die Transportsicherung entlang der Linie A-A in Figur 3a. Figur 3c zeigt einen Querschnitt durch die erfindungsgemäße Transportsicherung entlang der Linie B-B der Figur 3b.

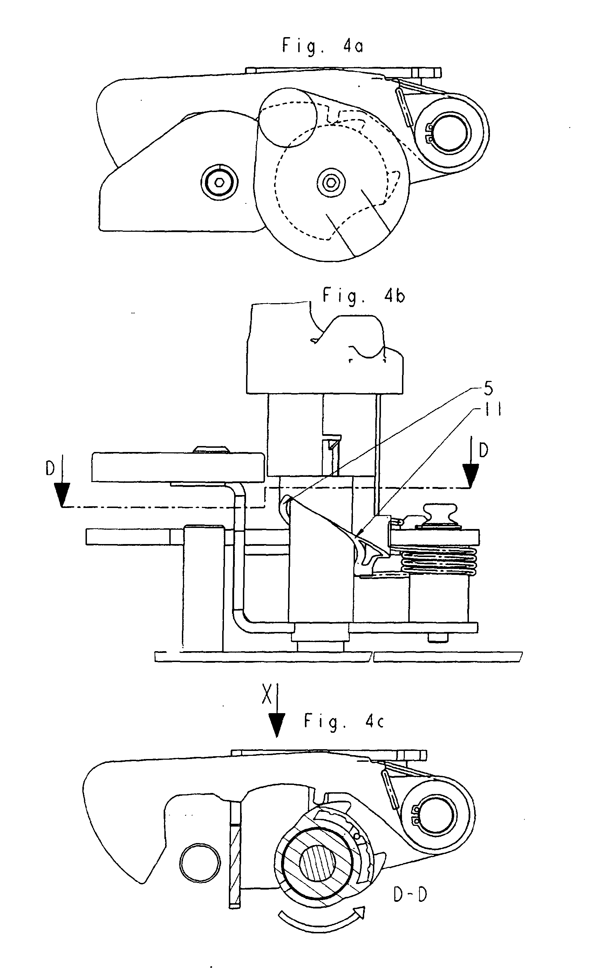

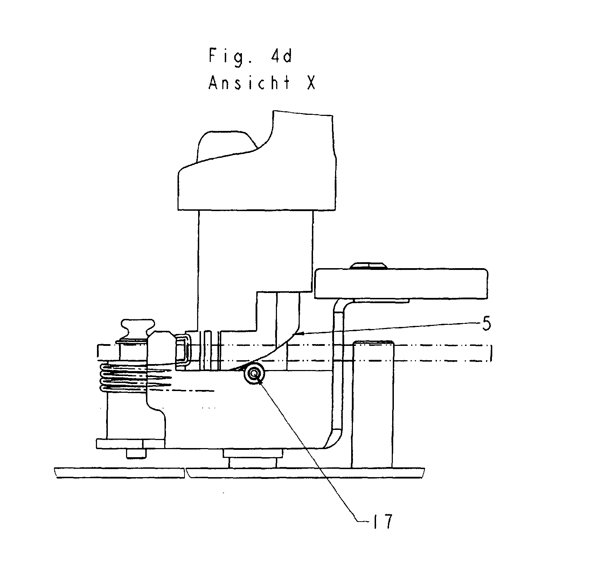

In Figur 4a wurde als nächster Schritt durch Drehen der Handhabe 9 der nockenförmige Abschnitt 7 entgegen dem Uhrzeigersinn gedreht, wodurch einerseits der Bolzen 6 aus seiner Verankerungsöffnung 13 herausbewegt, und andererseits durch die Drehung des nockenförmigen Abschnitts 7 der Sicherungshaken 10 über den an ihm angeordneten Zapfen 18 vom Stift 4 weggeschwenkt wurde. Figur 4b stellt eine Seitenansicht der erfindungsgemäßen Transportsicherung dar. Figur 4c zeigt einen Querschnitt durch die erfindungsgemäße Transportsicherung entlang der Linie D-D der Figur 4b. Figur 4d zeigt eine weitere Seitenansicht der erfindungsgemäßen Transportsicherung entlang der Sichtlinie X der Figur 4c, in der ein am statischen Gehäuse der Verriegelungsvorrichtung 1 angeordneter Bolzen 17 erkennbar ist. Ebenfalls zu erkennen ist eine der - in diesem Ausführungsbeispiel zwei - schräg zur Längsmittelachse der Verriegelungsvorrichtung 1 verlaufenden Führungsflächen 11 und 5, wobei die Führungsfläche 5 beim Drehen der Verriegelungsvorrichtung 1 am Bolzen 17 entlang gleitet und so der mit der Verriegelungsvorrichtung 1 verbundene Bolzen 6 aus seiner Verankerungsöffnung 13 nach oben herausbewegt wird.

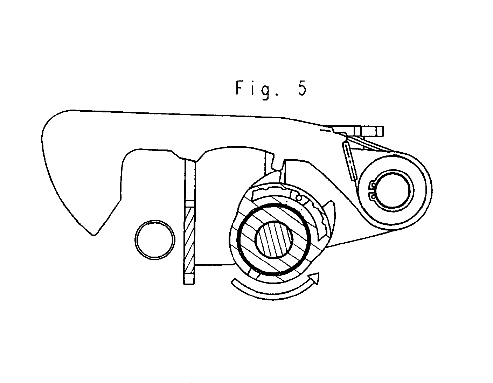

Figur 5, welche der Figur 4c entspricht, zeigt die erfindungsgemäße Transportsicherung nach einer weiteren Drehung der Verriegelungsvorrichtung 1, wodurch der Sicherungshaken 10 über den Zapfen 18 durch den nockenförmigen Abschnitt 7 der Verriegelungsvorrichtung 1 in seine maximal verschwenkte Position gelangt ist.

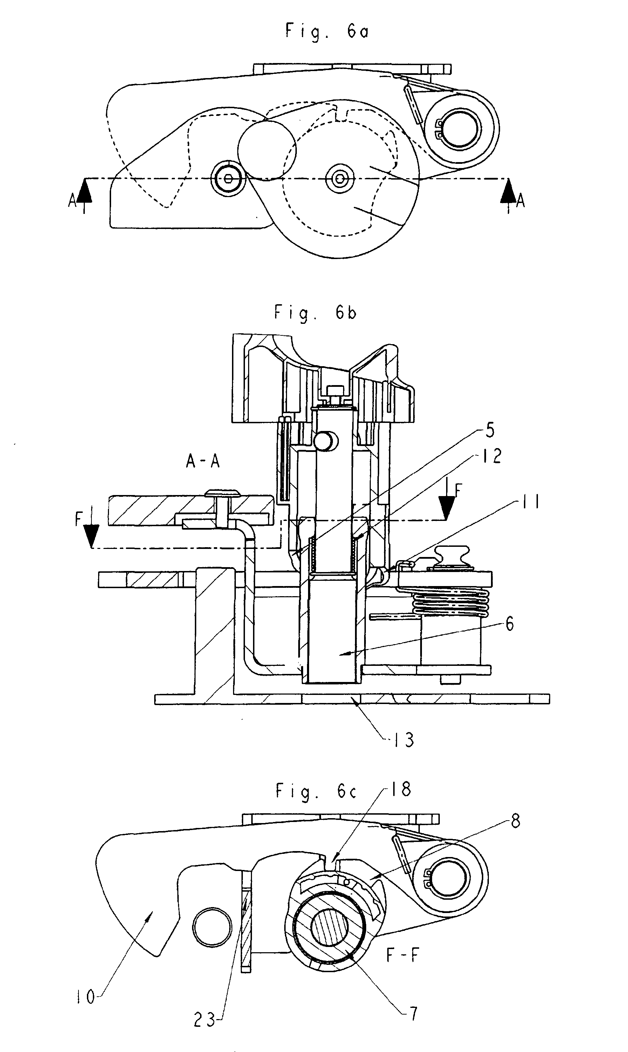

Die Figuren 6a bis 6c zeigen den nächsten Zustand im zeitlichen Ablauf, wobei, wie insbesondere in Figur 6c erkennbar ist, der am Sicherungshaken 10 angeordnete Zapfen 18 nunmehr in die Ausnehmung 8 des nockenförmigen Abschnitts 7 gelangt ist, wodurch der Bolzen 6 in der Verriegelungsvorrichtung 1 entgegen der Beaufschlagung durch die Feder 12 festgestellt ist. Ebenfalls zu erkennen ist, dass der Sicherungshaken 10 nun nicht mehr an der Auflagefläche 23 am statischen Gehäuse der Verriegelungsvorrichtung 1 aufliegt und dass der Bolzen 6 vollständig aus seiner Verankerungsöffnung 13 herausbewegt wurde, wodurch die den Bolzen 6 beaufschlagende Feder 12 maximal komprimiert wurde. In diesem Zustand befindet sich der Seitenausleger 15 in der entriegelten und entsicherten Transportstellung und kann nunmehr aus dieser Stellung herausbewegt werden.

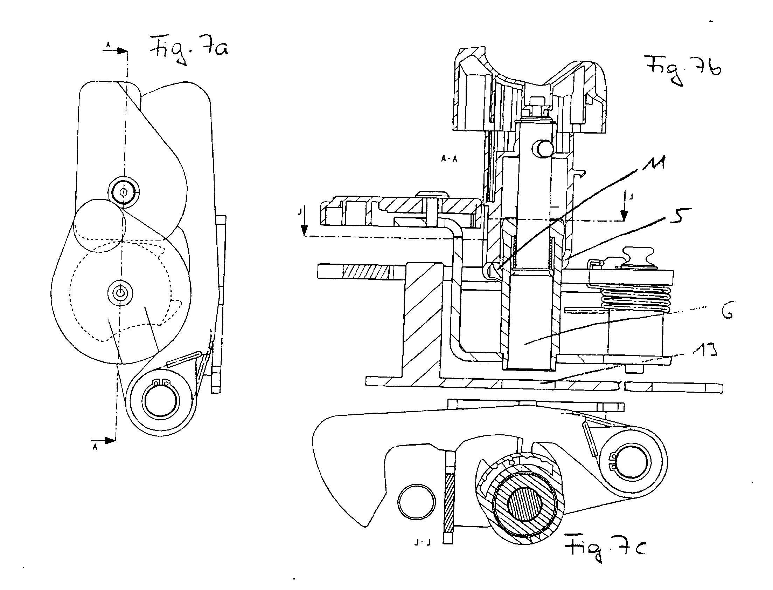

Die Figur 7 zeigt den Zustand der erfindungsgemäßen Transportsicherung nach Vornahme der in den Figuren 2 bis 6 beschriebenen Handlungen, wobei hier im Unterschied zu den Figur 2 bis 6 die Handhabe 9 im Uhrzeigersinn betätigt wurde. Dies zeigt, dass die Verriegelungsvorrichtung 1 drehrichtungsunabhängig durch Drehen lösbar ist. Im vorliegenden Ausführungsbeispiel wurde dies konstruktiv durch die Anordnung von zwei Führungsflächen 5 und 11 mit entgegengesetztem Schraubsinn erreicht, sodass der Bolzen 17 bei Drehung der Verriegelungsvorrichtung 1 gegen den Uhrzeigersinn entlang der Führungsfläche 5 und bei Drehung im Uhrzeigersinn entlang der Führungsfläche 11 gleitet und dadurch der Bolzen 6 in beiden Fällen aus seiner Verankerungsöffnung 13 nach oben herausbewegt wird. Es sei insbesondere auf die spiegelverkehrte Stellung der Führungsflächen 5 und 11 in den Figuren 6b und 7b hingewiesen.

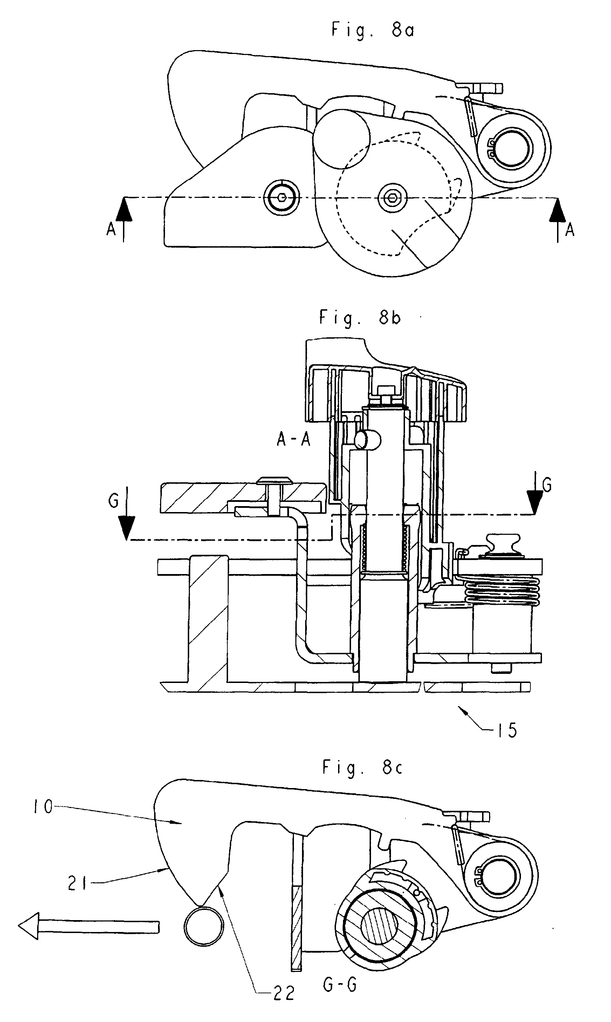

In den Figuren 8a bis 8c wurde der Seitenausleger 15 bereits teilweise aus seiner Transportposition in Richtung der Arbeitsposition herausbewegt, wodurch der Sicherungshaken 10 mit seiner abgeschrägten Außenkante 21 in Kontakt mit dem Stift 4 gekommen ist und dadurch verschwenkt wurde, was den Zapfen 18 aus der Ausnehmung 8 des nockenförmigen Abschnitt 7 herausbewegt und dadurch den nockenförmigen Abschnitt 7 der Verriegelungsvorrichtung 1 freigegeben hat. Durch die Feder 12 wurde dadurch der Bolzen 6 nach unten auf den Seitenausleger 15 gedrückt, sodass nun der Bolzen 6 am Seitenausleger 15 anliegt.

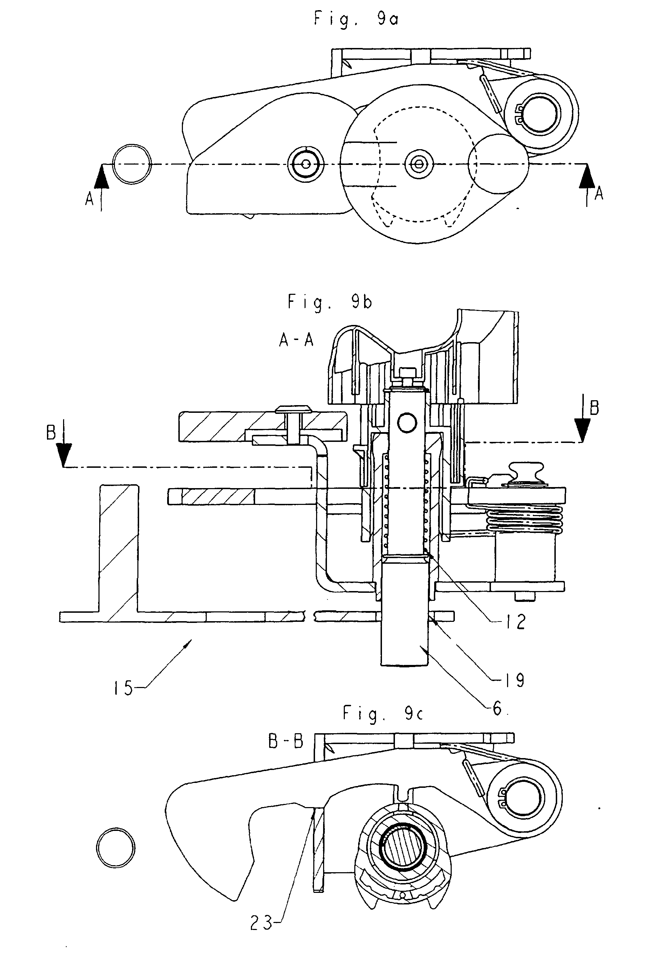

In den Figuren 9a bis 9c wurde der Seitenausleger 15 in seine voll herausgeführte Arbeitsposition gebracht. Der Bolzen 6 wurde durch die Feder 12 in die äußere Verankerungsöffnung 19 gedrückt und der Sicherungshaken 10 liegt nunmehr wieder an der Auflagefläche 23 am statischen Gehäuseteil der Verriegelungsvorrichtung 1 auf. Insgesamt befindet sich der Seitenausleger 15 also in seiner durch die Verriegelungsvorrichtung 1 verriegelten, voll herausbewegten Arbeitsposition.

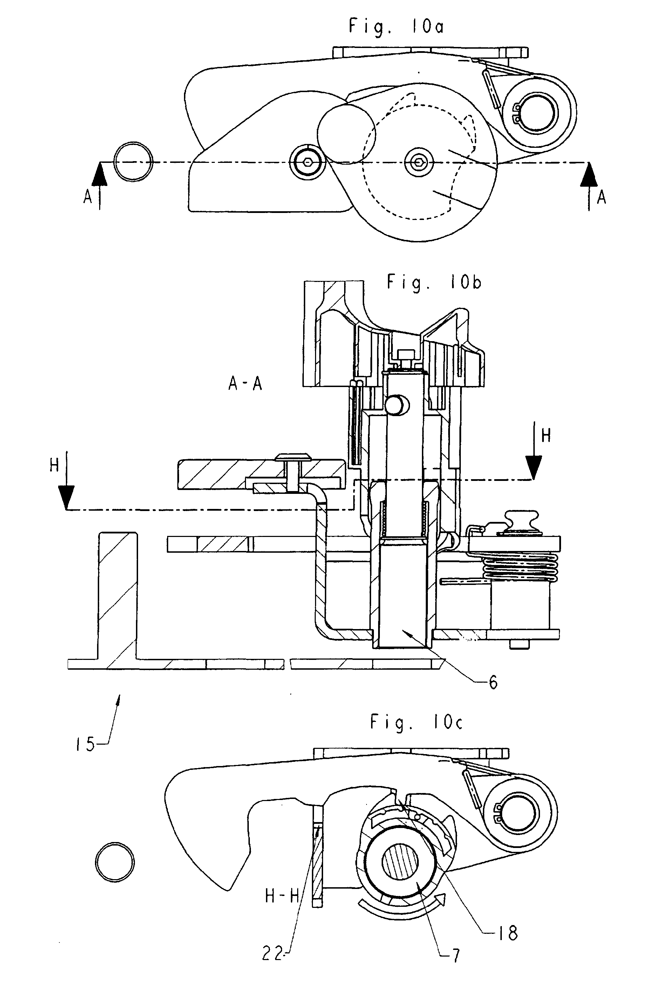

Die Figuren 10a bis 10c zeigen die erfindungsgemäße Transportsicherung nach der Entriegelung der Verriegelungsvorrichtung 1, wobei sich der Seitenausleger 15 noch in seiner Arbeitsposition befindet. Zu erkennen ist weiters, dass der Sicherungshaken 10 nun nicht mehr an der Auflagefläche 23 am statischen Gehäuseteil der Verriegelungsvorrichtung 1 anliegt, sondern mit seinem Zapfen 18 den nockenförmigen Abschnitt 7 feststellt, wodurch der Bolzen 6 in seiner gezeigten Position festgestellt wird.

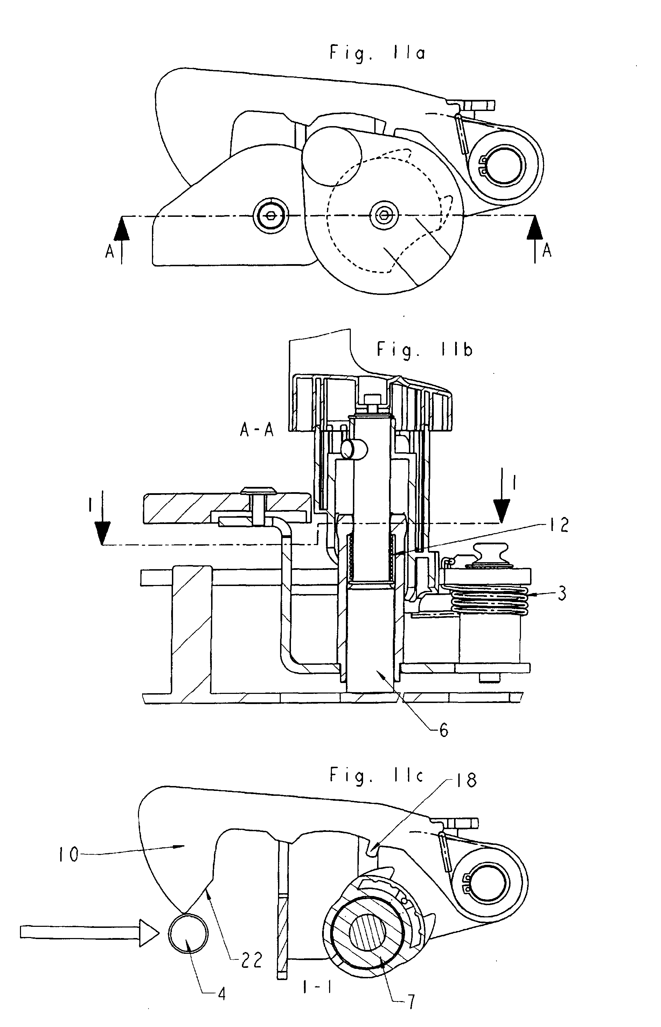

Die Figuren 11a bis11c entsprechen den Figuren 8a bis 8c mit dem Unterschied, dass der Seitenausleger 15 nunmehr aus seiner voll herausbewegten Arbeitsposition in Richtung seiner inneren Transportposition bewegt wird. Dabei ist der Sicherungshaken 10 durch den Kontakt seiner abgeschrägten Innenkante 22 mit dem Stift 4 verschwenkt worden, wodurch der nockenförmige Abschnitt 7 vom Zapfen 18 freigegeben wurde und der Bolzen 6 durch die Feder 12 an den Seitenausleger 15 gedrückt wird. Sobald der Bolzen 6 durch die Bewegung des Seitenauslegers 15 über die Verankerungsöffnung 13 gerät, wird er durch die Feder 12 in diese gedrückt und der Seitenausleger 15 so über die Verriegelungsvorrichtung 1 verriegelt. Der Sicherungshaken 10 wird durch die Feder 3 ebenfalls in seine Verankerungsposition gedrückt, in der er den Stift 4 umgreift, sodass der Seitenausleger 15 in seiner Transportstellung doppelt gesichert ist.

## Patentansprüche

1. Transportsicherung für einen Seitenausleger (15) eines Fahrzeuges (14) mit einer Verriegelungsvorrichtung (1) sowie einem zusätzlichen Sicherungshaken (10), **dadurch gekennzeichnet, dass** die Verriegelungsvorrichtung (1) derart in Bezug auf den Sicherungshaken (10) angeordnet ist, dass das Lösen der Verriegelungsvorrichtung (1) zu einem Lösen des Sicherungshakens (10) aus seiner Verankerung führt.

2. Transportsicherung nach Anspruch 1, **dadurch gekennzeichnet, dass** der Sicherungshaken (10) schwenkbar gelagert ist.

3. Transportsicherung nach Anspruch 1 oder 2, **dadurch gekennzeichnet, dass** eine Feder (3) vorgesehen ist, die den Sicherungshaken (10) in die Verankerungsposition drückt.

4. Transportsicherung nach einem der Ansprüche 1 bis 3, **dadurch gekennzeichnet, dass** die Verriegelungsvorrichtung (1) drehbar gelagert ist.

5. Transportsicherung nach Anspruch 4, **dadurch gekennzeichnet, dass** die Verriegelungsvorrichtung (1) durch Drehen lösbar ist.

6. Transportsicherung nach Anspruch 5, **dadurch gekennzeichnet, dass** die Verriegelungsvorrichtung (1) drehrichtungsunabhängig durch Drehen lösbar ist.

7. Transportsicherung nach Anspruch 4 oder 5, **dadurch gekennzeichnet, dass** die Verriegelungsvorrichtung (1) zumindest eine schräg zur Längsmittelachse der Verriegelungsvorrichtung (1) verlaufende Führungsfläche (5, 11) aufweist, wobei die Führungsfläche (5) beim Drehen der Verriegelungsvorrichtung (1) an einem Bolzen (17) entlang gleitet.

8. Transportsicherung nach einem der Ansprüche 1 bis 7, **dadurch gekennzeichnet, dass** die Verriegelungsvorrichtung (1) in Richtung der Verriegelungsposition von einer Feder (12) beaufschlagt ist.

9. Transportsicherung nach einem der Ansprüche 1 bis 8, **dadurch gekennzeichnet, dass** der Sicherungshaken (10) an einem exzentrisch geformten Abschnitt der Verriegelungsvorrichtung (1) teilweise anliegt.

## Claims

1. A transport securing arrangement for a side extension arm (15) of a vehicle (14) having a locking device (1) and an additional securing hook (10), **characterised in that** the locking device (1) is arranged in relation to the securing hook (10) in such a way that release of the locking device (1) leads to release of the securing hook (10) from its anchorage.

2. A transport securing arrangement as set forth in claim 1 **characterised in that** the securing hook (10) is supported pivotably.

3. A transport securing arrangement as set forth in claim 1 or 2 **characterised in that** there is provided a spring (3) which urges the securing hook (10) into the anchorage position.

4. A transport securing arrangement as set forth in one of the claims 1 to 3 **characterised in that** the locking device (1) is supported rotatably.

5. A transport securing arrangement as set forth in claim 4 **characterised in that** the locking device (1) is releasable by rotation.

6. A transport securing arrangement as set forth in claim 5 **characterised in that** the locking device (1) is releasable by rotation independently of the direction of rotation.

7. A transport securing arrangement as set forth in claim 4 or 5 **characterised in that** the locking device (1) has at least one guide surface (5, 11) extending inclinedly relative to the longitudinal center line of the locking device (1), wherein the guide surface slides along a pin (17) upon rotation of the locking device (1).

8. A transport securing arrangement as set forth in one of the claims 1 to 7 **characterised in that** the locking device (1) is urged in the direction of the locking position by a spring (12).

9. A transport securing arrangement as set forth in one of the claims 1 to 8 **characterised in that** the securing hook (10) partially bears against an eccentrically shaped portion of the locking device (1).

## Revendications

1. Dispositif de sécurité de transport pour un bras latéral (15) d'un véhicule (14), comprenant un dispositif de verrouillage (1) ainsi qu'un crochet de sécurité (10) supplémentaire, **caractérisé en ce que** le dispositif de verrouillage (1) est disposé par rapport au crochet de sécurité (10) de telle manière que le déverrouillage du dispositif de verrouillage (1) entraîne un désancrage du crochet de sécurité (10).

2. Dispositif de sécurité de transport selon la revendication 1, **caractérisé en ce que** le crochet de sécurité (10) est positionné de manière à pouvoir pivoter.

3. Dispositif de sécurité de transport selon la revendication 1 ou 2, **caractérisé en ce qu'**un ressort (3), qui pousse le crochet de sécurité (10) vers la position d'ancrage, est prévu.

4. Dispositif de sécurité de transport selon l'une des revendications 1 à 3, **caractérisé en ce que** le dispositif de verrouillage (1) est positionné de manière à pouvoir tourner.

5. Dispositif de sécurité de transport selon la revendication 4, **caractérisé en ce que** le dispositif de verrouillage (1) est déverrouillable par rotation.

6. Dispositif de sécurité de transport selon la revendication 5, **caractérisé en ce que** le dispositif de verrouillage (1) est déverrouillable par rotation indépendamment du sens de rotation.

7. Dispositif de sécurité de transport selon la revendication 4 ou 5, **caractérisé en ce que** le dispositif de verrouillage (1) présente au moins une surface de guidage (5, 11) s'étendant obliquement par rapport à l'axe central longitudinal du dispositif de verrouillage (1), la surface de guidage (5) glissant le long d'un boulon (17) lors de la rotation du dispositif de verrouillage (1).

8. Dispositif de sécurité de transport selon l'une des revendications 1 à 7, **caractérisé en ce que** le dispositif de verrouillage (1) est poussé par un ressort (12) vers la position de verrouillage.

9. Dispositif de sécurité de transport selon l'une des revendications 1 à 8, **caractérisé en ce que** le crochet de sécurité (10) est en partie appuyé contre une section formée de façon excentrique du dispositif de verrouillage (1).
